(19)

Europäisches
Patentamt
European
Patent Office
Office européen
des brevets

(11) **EP 1 965 352 A1**

(12) **EUROPEAN PATENT APPLICATION**

(43) Date of publication:
**03.09.2008 Bulletin 2008/36**

(51) Int Cl.:
**G06T 3/40** (2006.01)   **G01S 7/298** (2006.01)
**G06F 7/548** (2006.01)

(21) Application number: **08003556.1**

(22) Date of filing: **27.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.02.2007 KR 20070020623**
**26.02.2008 KR 20080017426**

(71) Applicant: **MEDISON CO., LTD.**
**Kangwon-do 250-870 (KR)**

(72) Inventor: **Jeong, Mok Kun**
**Seoul 139-768 (KR)**

(74) Representative: **Schmid, Wolfgang**
**Lorenz & Kollegen**
**Patent- und Rechtsanwaltskanzlei**
**Alte Ulmer Strasse 2**
**D-89522 Heidenheim (DE)**

(54) **Method of forming ultrasound image by performing digital scan conversion in frequency domain**

(57)    A method of forming ultrasound image is disclosed. A first image data described with a cylindrical coordinate in a space domain is formed from receiving signals provided by a probe. A scan-converted Fourier transformation described with a rectangular coordinate in a frequency domain is applied to the first image data to form second image data described with the rectangular coordinate in a frequency domain. An inverse Fourier transformation is applied to the second image data to form a third image data described with the rectangular coordinate in the space domain. An ultrasound image is formed with the third image data.

FIG. 3

**EP 1 965 352 A1**

**Description**

The present application claims priority from Korean Patent Application Nos. 10-2007-0020623 filed on February 28, 2007 and 10-2008-0017426 filed on February 26, 2008, the entire subject matter of which are incorporated herein by reference.

BACKGROUND OF THE INVENTION

1. Field

The present invention generally relates to a method of forming an ultrasound image, and more particularly to a method of forming an ultrasound image by performing digital scan conversion in a frequency domain.

2. Background

An ultrasound diagnostic system shows an internal structure of a target object without dissecting or disassembling said object due to its non-invasive and non-destructive nature. The ultrasound diagnostic system includes a probe, a beam former, an analog-digital converter and an image processor. The probe may be a convex probe, a phased array probe or a sector probe according to scanning means or scanning type. The probe is configured with a plurality of transducers. The transducers transmit ultrasound signals to a focal point and convert the ultrasound signals into electric signals. In a single transmission, one or more transducers generate the ultrasound signals either independently or simultaneously. The ultrasound signals transmitted from each transducer are reflected on a surface of a reflector, at which discontinuity of acoustic impedance is generated. Each transducer converts the ultrasound signals reflected from the surface of the reflector into electrical receiving signals. The electrical receiving signals are converted into digital signals by the analog-digital converter. The beam former forms focused-transmitting signals and focused-receiving signals in consideration of a focal point of the ultrasound signals and positions of the transducers. The image processor forms ultrasound image data based on the focused-receiving signals.

Generally, the receiving signals obtained from the convex probe, the phased array probe or the sector probe are expressed in the cylindrical coordinates. Further, the image data formed by the image processor are also described with cylindrical coordinates in a space domain. The spatial image data of the cylindrical coordinates should be converted into the rectangular coordinates to display an ultrasound image on a screen described with the rectangular coordinates. This coordinate transformation is referred to as digital scan conversion.

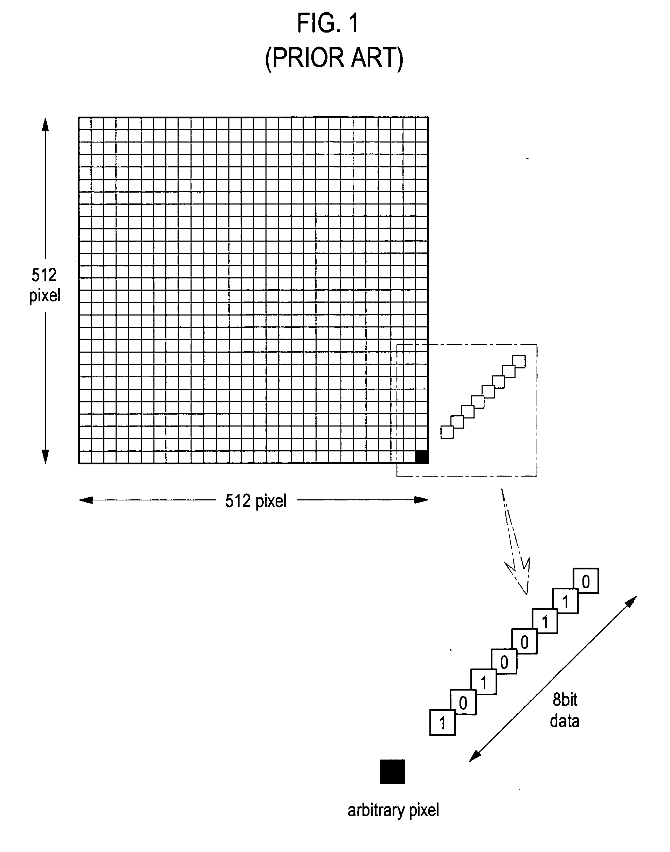

As shown in Fig. 1, a conventional digital scan converter is configured with a semiconductor memory having a plurality of storing regions arranged like a section paper. For example, the digital scan converter has 512 * 512 storing regions along horizontal and vertical directions. Each storing region corresponds to a pixel of a screen. A size of the image data stored in each storing region of the digital scan converter denotes an expression range. In case an 8-bit image data is stored in the storing regions, the expression range of the image data ranges from 0 to 255.

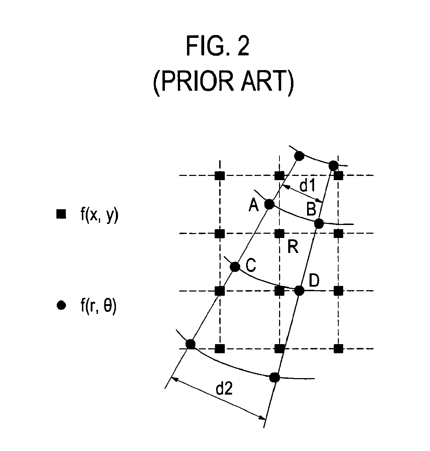

As shown in Fig. 2, in the conventional scan conversion, spatial image data f(r, θ) of the cylindrical coordinates in the storing region of the memory is converted into spatial image data f(x, y) of the rectangular coordinates. In the conversion, the image data of a pixel R in the rectangular coordinates are obtained by bilinear interpolation with the image data of four pixels A, B, C and D in the cylindrical coordinates.

As mentioned above, in the conventional digital scan conversion, the spatial image data of pixels between the scan lines in the rectangular coordinates are obtained by the interpolation with the spatial image data in the cylindrical coordinate. As such, a considerable amount of data calculation is required. Further, in case of a fan-shaped ultrasound image, a space between scan lines S1 and S2 becomes wider (d1 < d2) as a distance between a point on the scan line and the probe becomes farther. That is, a depth of the reflection surface (depth of image) becomes deeper. Thus, calculation error increases as the image depth becomes deeper.

BRIEF DESCRIPTION OF THE DRAWINGS

Arrangements and embodiments may be described in detail with reference to the following drawings in which like reference numerals refer to like elements and wherein:

Fig. 1 is a schematic diagram showing storing regions in a conventional scan converter;
Fig. 2 is an explanatory diagram showing transformation between cylindrical coordinates and rectangular coordinates;
Fig. 3 is a schematic diagram showing a method of forming ultrasound image by performing digital scan conversion in a frequency domain in accordance with the present invention;

**2**

Figs. 4A and 4B are schematic diagrams showing coordinates of a point in a space domain and a frequency domain, respectively;

Fig. 5 is an exemplary diagram showing that spatial image data of the cylindrical coordinates are classified by scan lines and stored in regions of a memory;

Fig. 6 is a digital scan conversion image obtained by a bilinear interpolation of image data in a space domain in accordance with the prior art; and

Fig. 7 is an exemplary image obtained by performing Fourier Transformation of a first image data in a space domain to form a second image data in a frequency domain, applying digital scan conversion to the second image data, and applying Inverse Fourier Transformation to the scan converted second image data in accordance with the present invention.

## DETAILED DESCRIPTION OF THE INVENTION

A detailed description may be provided with reference to the accompanying drawings. One of ordinary skill in the art may realize that the following description is illustrative only and is not in any way limiting. Other embodiments of the present invention may readily suggest themselves to such skilled persons having the benefit of this disclosure.

Analog signals received by a convex probe, a phased array probe or a sector probe are converted into digital signals and focused to form spatial image data $f(r, \theta)$ (a first image data), which are described with the cylindrical coordinates in a space domain. Fourier Transformation $Fsc(u, v)$, which is described with the rectangular coordinates in a frequency domain, is applied to the spatial image data $f(r, \theta)$ in order to obtain scan-converted image data (a second image data) described with the rectangular coordinates in the frequency domain. Inverse Fourier Transformation (IFT) is applied to the scan-converted image data described with the rectangular coordinates in the frequency domain. Thus, image data $f(x, y)$ (a third image data) described with the rectangular coordinates in the space domain can be obtained.

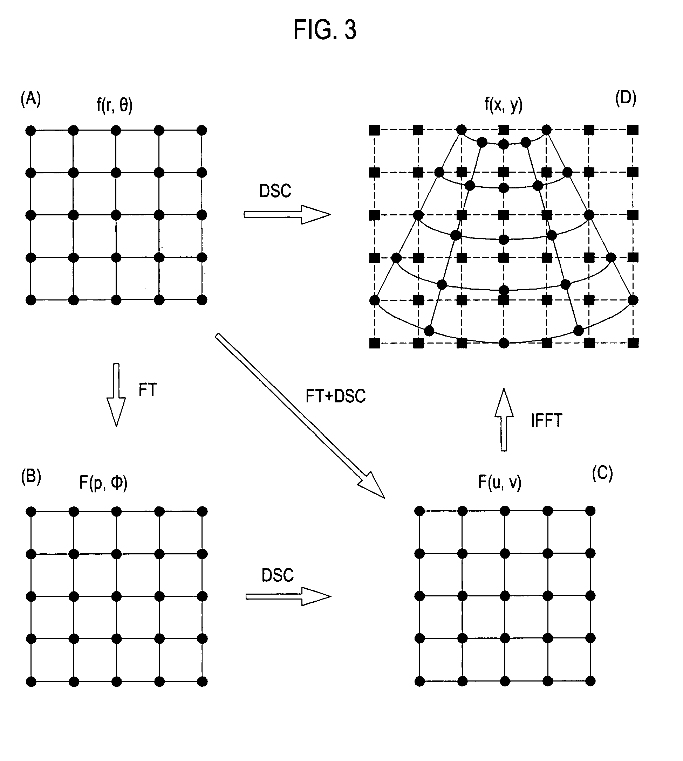

Fig. 3 shows a schematic procedure of scan conversion in accordance with the present invention. In the present invention, a fan-shaped space domain in the cylindrical coordinates is transformed into a rectangular-shaped frequency domain. Thus, one interpolation can be applied regardless of the image depth since spaces between scan lines do not become wider, although image depths become deeper. Accordingly, the amount of data calculation can be uniform regardless of the image depth.

Hereinafter, a method of obtaining scan-converted Fourier Transformation $Fsc(u, v)$ in the frequency domain is described. The Fourier Transformation (FT) of the rectangular coordinates can be given as the following Eq. 1.

$$F(u,v) = \iint f(x,y)e^{-j2\pi(ux+vy)}dxdy \qquad \text{Eq. (1)}$$

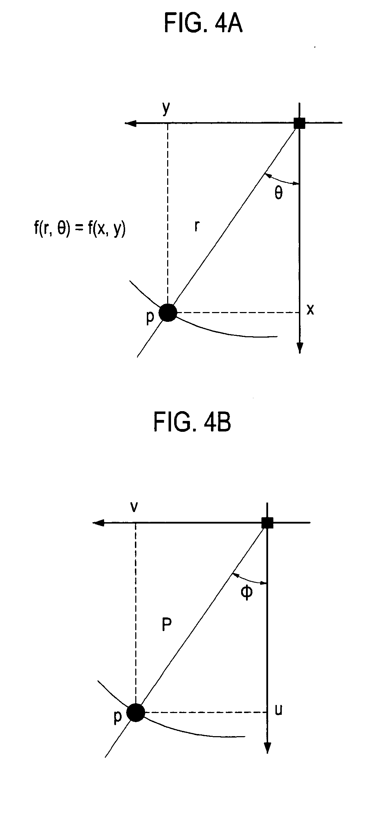

Referring to Figs. 4A and 4B, the coordinate conversion of a point P between the cylindrical coordinates and the rectangular coordinates can be given as the following Eq. 2.

$$\begin{aligned} x &= r\sin\theta & u &= \rho\sin\phi \\ y &= r\cos\theta & v &= \rho\cos\phi \end{aligned} \qquad \text{Eq. (2)}$$

From Eq. 2, the exponent in Eq. 1 can be expressed as the following Eq. 3.

$$ux + vy = \rho r \sin\theta\sin\phi + \rho r\cos\theta\cos\phi = \rho r\cos(\theta - \phi) \qquad \text{Eq. (3)}$$

According to Eqs. 2 and 3, Fourier Transformation (FT) is applied to the spatial data $f(r, \theta)$ of the cylindrical coordinates. Thus, Fourier Transformation $F(\ , \phi)$ of the frequency domain can be obtained as shown in the following Eq. 4.

$$F(\rho,\phi) = \int_{-\pi}^{\pi} \int_{0}^{r_o} f(r,\theta)e^{-j2\pi(\rho\, r\cos(\theta-\phi))} r\,dr\,d\theta$$

Eq. (4)

In order to obtain scan-converted Fourier Transformation Fsc(u, v) from the Fourier Transformation F($\rho$, φ) of the frequency domain, Fourier coefficients in Eq. 4 are calculated at a position ($\rho$, φ) corresponding to a position (u, v). By using the coordinate conversion of the following Eq. 5, the scan-converted Fourier Transformation Fsc(u, v), i.e., the Fourier Transformation of the rectangular coordinates, can be given as the following Eq. 6 in the frequency domain.

$$\rho = \sqrt{u^2 + v^2}$$
$$\phi = \tan^{-1}(v/u)$$

Eq. (5)

$$F_{sc}(u,v) = F(\rho,\phi)\Big|_{\rho=\sqrt{u^2+v^2},\,\phi=\tan^{-1}(v/u)} = \int_{-\pi}^{\pi}\int_{0}^{r_o} f(r,\theta)e^{-j2\pi(\rho\, r\cos(\theta-\phi))} r\,dr\,d\theta$$

Eq. (6)

The scan-converted Fourier Transformation Fsc(u, v) in the frequency domain is applied to the spatial image data f(r, θ) of the cylindrical coordinate. Since the Fourier Transformation Fsc(u, v) given as Eq. 6 is expressed in the frequency domain, an Inverse Fourier Transformation should be applied to the Fourier Transformation Fsc(u, v) in order to obtain image data f(x, y) in the space domain. In an embodiment of the present invention, Inverse Fast Fourier Transformation (IFFT) is adopted for the fast calculation, as shown in Eq. 7.

$$f(x,y) = IFFT\{F_{sc}(u,v)\}$$

Eq. (7)

If the IFFT shown in equation 7 is performed after applying zero padding to Fsc(u, v), then it is possible to obtain spatial image data f(x, y), which are expanded with arbitrary magnification due to a period extension.
If the spatial image data f(r, θ) are real numbers, then the Fourier Transformation Fsc(u, v) has the relationship shown in the following Eq. 8. Thus, the calculation error can be reduced since only half of the image data in the frequency domain needs to be calculated due to the symmetric relation.

$$F_{sc}(u,v) = F_{sc}^{*}(-u,-v)$$

Eq. (8)

As shown in the following Eq. 9, a low pass band filter can be applied to the Fourier Transformation Fsc(u, v) in the frequency domain for eliminating noise. In Eq. 9, $\rho$ threshold denotes a blocking frequency.

$$F_{sc}(u,v) = F(\rho,\phi)\Big|_{\rho=\sqrt{u^2+v^2},\,\phi=\tan^{-1}(v/u)} = 0,\; for\;\; \rho > \rho_{threshold}$$

Eq. (9)

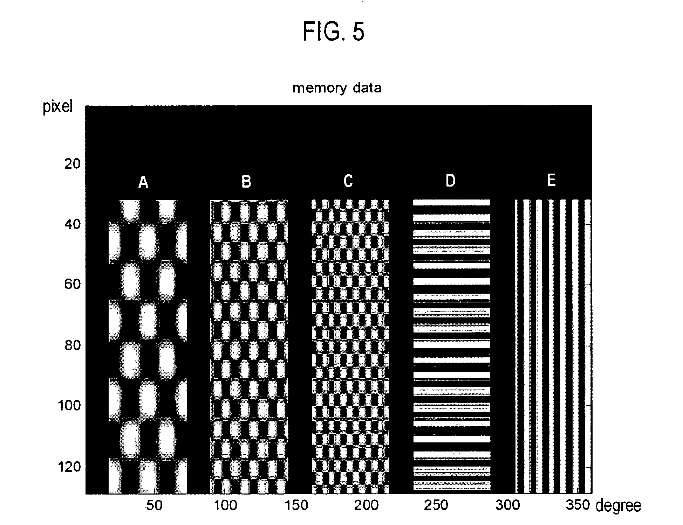

Hereinafter, while referring to Figs. 5 to 9, a comparative description between the prior art and the present invention will be illustrated.

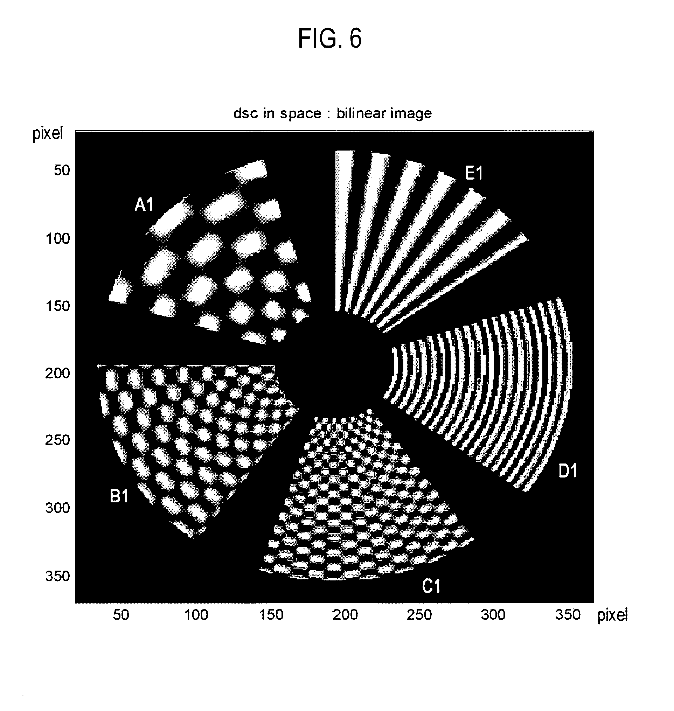

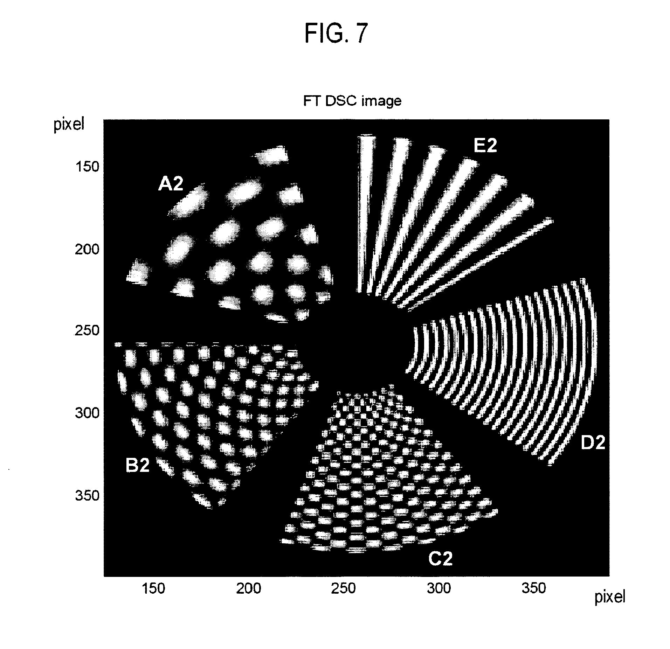

As shown in Fig. 5, spatial images A to E are formed with image data f(r, θ) of the cylindrical coordinates, which are classified with the scan lines and stored in each region of a memory. Fig. 6 shows digital scan converted images A1 to E1 obtained by performing bilinear interpolation with the image data in the space domain in accordance with the prior art. Fig. 7 shows images A2 to E2 obtained in accordance with the present invention, i.e., the images A2 to E2 shown in FIG. 7 are obtained by performing Fourier transformation of the image data in the space domain to obtain image data of the frequency domain, applying digital scan conversion to the image data of the frequency domain, and applying the IFT to the digital scan converted image data to obtain image data in the space domain.

In the present invention, the scan conversion is performed in the frequency domain. Thus, it is possible to reduce the dependency of position information in the image. As such, the calculation error can be reduced.

Although embodiments have been described with reference to a number of illustrative embodiments thereof, it should be understood that numerous other modifications and embodiments can be devised by those skilled in the art that will fall within the scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1.  A method of forming an ultrasound image, comprising:

    forming a first image data described with a cylindrical coordinate in a space domain from receiving signals provided by a probe;
    applying a scan-converted Fourier transformation described with a rectangular coordinate in a frequency domain to the first image data to form second image data described with the rectangular coordinate in a frequency domain;
    applying an inverse Fourier transformation to the second image data to form a third image data described with the rectangular coordinate in the space domain; and
    forming an ultrasound image with the third image data.

2.  The method of Claim 1, wherein the first image data is expressed as f(r, θ), the second image data is formed by applying the scan-converted Fourier transformation as shown in the following equation

$$F_{SC}(u,v) = F(\rho,\phi)\Big|_{\rho=\sqrt{u^2+v^2},\,\phi=\tan^{-1}(v/u)} = \int_{-\pi}^{\pi}\int_{0}^{r_o} f(r,\theta)e^{-j2\pi(\rho\, r\cos(\theta-\phi))} r\,dr\,d\theta$$

    and wherein u, v,    and φ satisfy the following equations in the frequency domain u = ρsinφ and v = ρcosφ.

3.  The method of Claim 1, wherein the probe is selected from a group consisting of a convex probe, a phased array probe and a sector probe.

4.  The method of Claim 3, wherein zero padding is performed to the second image data prior to applying the inverse Fourier transformation.

5.  The method of Claim 4, wherein the inverse Fourier transformation is Inverse Fast Fourier Transformation.

# FIG. 1
# (PRIOR ART)

512
pixel

512 pixel

8bit
data

0
1
1
0
0
1
0
1

arbitrary pixel

# FIG. 2
# (PRIOR ART)

$\blacksquare$  f(x, y)

$\bullet$  f(r, θ)

# FIG. 3

## FIG. 4A

$$f(r, \theta) = f(x, y)$$

## FIG. 4B

# FIG. 5

memory data

# FIG. 6

dsc in space : bilinear image

# FIG. 7

FT DSC image

# EUROPEAN SEARCH REPORT

Application Number

EP 08 00 3556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YORK G ET AL: "ULTRASOUND PROCESSING AND COMPUTING: REVIEW AND FUTURE DIRECTIONS" ANNUAL REVIEW OF BIOMEDICAL ENGINEERING, ANNUAL REVIEW INCO., PALO ALTO, CA, US, vol. 1, 1 January 1999 (1999-01-01), pages 559-588, XP008027744 * page 571 - page 572; figure 5 * ----- | 1-5 | INV. G06T3/40 G01S7/298 G06F7/548 |
| A | GB 2 044 498 A (FIASONICS INC) 15 October 1980 (1980-10-15) * the whole document * ----- | 1-5 | |

TECHNICAL FIELDS SEARCHED (IPC)

G06T
G01S
G06F

The present search report has been drawn up for all claims

| Place of search | Date of completion of the search | Examiner |
|---|---|---|
| Munich | 29 May 2008 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                         
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 00 3556

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2008

| Patent document cited in search report | | Publication date | Patent family member(s) | | Publication date |
|---|---|---|---|---|---|
| GB 2044498 | A | 15-10-1980 | DE | 3005823 A1 | 25-09-1980 |
| | | | JP | 55125463 A | 27-09-1980 |
| | | | US | 4241412 A | 23-12-1980 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070020623
- KR 1020080017426